Europäisches Patentamt

European Patent Office

Office européen des brevets

(19)

(11) Veröffentlichungsnummer: **0 123 145**
**A1**

(12) # EUROPÄISCHE PATENTANMELDUNG

(21) Anmeldenummer: 84103213.9

(22) Anmeldetag: 23.03.84

(51) Int. Cl.³: **A 61 C 17/02**
**A 61 H 13/00**

(30) Priorität: 07.04.83 DE 3312451

(43) Veröffentlichungstag der Anmeldung:
31.10.84 Patentblatt 84/44

(84) Benannte Vertragsstaaten:
AT BE CH DE FR GB IT LI LU NL SE

(71) Anmelder: Gimelli & Co AG
Eichenweg 2
CH-3052 Zollikofen(CH)

(72) Erfinder: Hommann, Edgar
Reuenberg
CH-3257 Grossaffoltern(CH)

(74) Vertreter: Schlagwein, Udo, Dipl.-Ing.
Anwaltsbüro Ruppert & Schlagwein Bahnhofsallee 11
D-6350 Bad Nauheim(DE)

(54) Mund- und Zahnspritzgerät.

(57) Bei einem Mund- und Zahnspritzgerät ist ein Handstück (6) in einer Halterung (8) derart gelagert, daß das Handstück (6) aus einer stehenden Position um eine Achse (9) in eine liegende Position parallel zur Längswand eines Gerätesockels (1) des Mund- und Zahnspritzgerätes geschwenkt werden kann. Durch diese Gestaltung wird es möglich, den Wasserbehälter (2) von der Schmalseite (11) des Gerätesockels (1) her als Deckel über den Gerätesockel (1) zu schieben.

Fig 1

0123145

Gimelli & Co AG, CH-3052 Zollikofen          24.03.1983

- 1 -

## Mund- und Zahnspritzgerät

Die Erfindung bezieht sich auf ein Mund- und Zahnspritzgerät mit einem Gerätesockel, in dem eine Halterung mit
einem darin lösbar befestigten Handstück für eine Spritzdüse angeordnet ist, und das einen Wasserbehälter hat,
der wahlweise auf den Gerätesockel aufsetzbar oder über
den Gerätesockel als Deckel zu stülpen ist. Ein solches
Mund- und Zahnspritzgerät ist z. B. in der Europäischen
Patentanmeldung 0029636 beschrieben.

Bei dem bekannten Mund- und Zahnspritzgerät wird der
Wasserbehälter zum Transport des Gerätes über die in
Benutzungslage vordere Seite des Gerätesockels, also
über die Breitseite, gestülpt. Dadurch läßt sich das
Mund- und Zahnspritzgerät für die Reise in einen relativ kompakten Zustand bringen. Zum Transport ist allerdings das Handstück mit seinem Wasserschlauch vom Gerätesockel zu lösen. Zu diesem Zweck ist die Halterung des
Handstückes mit einem Kuppelstück versehen, mit dem sie
in eine Aufnahme im Gerätesockel gesteckt werden kann.
Sowohl dieses Handstück mit Kuppelstück als auch die
verschiedenen Spritzdüsen müssen bei dem bekannten

- 2 -

Mund- und Zahnspritzgerät separat transportiert werden,
was unpraktisch ist und zu Beschädigungen oder gar
einem Verlust dieser Bauteile führen kann.

Durch die US-PS 33 93 673 ist es auch schon bekannt, die
Halterung des Handstückes bei einem Mund- und Zahnspritzgerät verschiebbar auszubilden, so daß die Halterung zum
Transport in den Gerätesockel hineingeschoben werden kann.
Da das Handstück jedoch stets stehend in der Halterung
gehalten ist, muß im Deckel, also in dem umgestülpten
Wasserbehälter, relativ viel Platz vorgesehen sein, damit das Handstück unter dem Deckel Platz finden kann.

Der Erfindung liegt die Aufgabe zugrunde, ein Mund- und
Zahnspritzgerät so zu gestalten, daß das Handstück beim
Transport im Gerätesockel in seiner Halterung verbleiben
kann, ohne daß dadurch ein unerwünscht großer zusätzlicher
Platzbedarf entsteht.

Diese Aufgabe wird erfindungsgemäß dadurch gelöst, daß
die Halterung für das Handstück schwenkbar ausgebildet
ist und daß der Gerätesockel einen Freiraum zur Aufnahme
des von der Halterung getragenen, in eine liegende Position
geschwenkten Handstückes hat.

Der Hauptvorteil der Erfindung liegt darin, daß bei einem
erfindungsgemäßen Mund- und Zahnspritzgerät zum Aufschieben des Deckels lediglich das in der Halterung befindliche Handstück umgelegt werden muß. Der Schlauch des
Handstückes kann stets am Pumpenauslaß angeschlossen
bleiben. Dadurch ist das erfindungsgemäße Mund- und
Zahnspritzgerät sehr schnell und bequem nach einem
Transport in seine Betriebsstellung zu bringen bzw.
umgekehrt nach Benutzung für den Transport zu schließen.

Da das Handstück beim Transport stets im Gerätesockel verbleibt, ist es vor Beschädigungen und Verlust geschützt. Durch die Möglichkeit des Umlegens des Handstückes kann der als Deckel dienende Wasserbehälter als eng über den Gerätesockel zu stülpendes Bauteil ausgebildet werden, so daß das Mund- und Zahnspritzgerät im verschlossenen Transportzustand sehr kompakt ist.

Konstruktiv besonders einfach ist die im Anspruch 2 angegebene Ausgestaltung der Erfindung.

Von der Handhabung her günstig ist es, wenn die Halterung an der freien Stirnseite eines an einer Grundfläche fliegend gehaltenen Wickelkörpers für den Wasserschlauch des Handstückes vorgesehen ist. Der Wasserschlauch ist üblicherweise wendelförmig aufgewickelt und vermag nach Benutzung des Mund- und Zahnspritzgerätes aufgrund seiner Eigenelastizität von selbst wieder auf den Wickelkörper zu rutschen.

Verschiedene Spritzdüsen können ebenfalls platzsparend und vor Verlust und Beschädigung gesichert transportiert werden, wenn der Wickelkörper gemäß einer anderen Ausgestaltung der Erfindung als Hohlkörper zur Aufbewahrung von verschiedenen Spritzdüsen ausgebildet ist.

Durch die im Anspruch 5 angegebenen Merkmale wird erreicht, daß der Wasserbehälter beim Aufschieben des Wasserschlauches und beim Ergreifen bzw. Ablegen des Handstückes nicht stört.

Nicht benutzte Spritzdüsen stehen für den Gebrauch stets griffbereit, wenn in der Bodenfläche des Freiraumes

Aufnahmen zur senkrechten Ablage nicht benutzter Spritzdüsen vorgesehen sind.

Wenn das Mund- und Zahnspritzgerät die im Anspruch 7
angegebenen Merkmale hat, dann ist es möglich, an einem
Wandhalter, der fest an eine Wand montiert ist, wahlweise entweder ein Zahnbürstenaufladegerät oder aber
den Gerätesockel des Mund- und Zahnspritzgerätes zu
befestigen. An dem Gerätesockel kann anschließend das
Zahnbürstenaufladegerät befestigt werden, so daß insgesamt nur eine Wandhalterung an der Wand zu befestigen
ist.

Von Vorteil ist es, wenn der Antrieb der Wasserpumpe
mittels einer elektrischen Zahnbürste erfolgt, welche
kopfüber in eine Aufnahme des Gerätesockels zu stülpen
ist. Bei einer solchen Ausführungsform ist im Gerätesockel kein Pumpenantrieb erforderlich. Dadurch baut
der Gerätesockel besonders klein und hat ein geringes
Gewicht, was für den Transport auf Reisen zweckmäßig
ist.

Die Erfindung läßt zahlreiche Ausführungsmöglichkeiten
zu. Zu ihrer Verdeutlichung ist eine davon in der
Zeichnung dargestellt und wird nachfolgend beschrieben.

Es zeigen:

    Figur 1  -  eine räumliche Ansicht eines erfindungs-
                 gemäß gestalteten Mund- und Zahnspritz-
                 gerätes schräg von vorn gesehen;

    Figur 2  -  das Mund- und Zahnspritzgerät gemäß

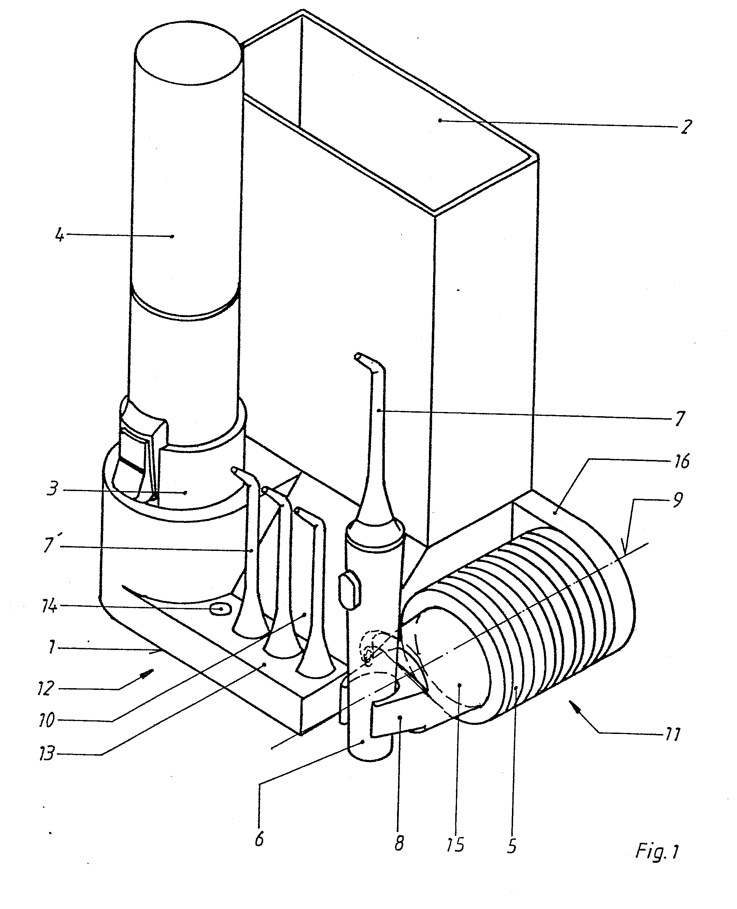

                 Figur 1 in Transportposition,also in
                 einer solchen Position, in der sein Wasserbehälter als Deckel über den
Gerätesockel geschoben ist;

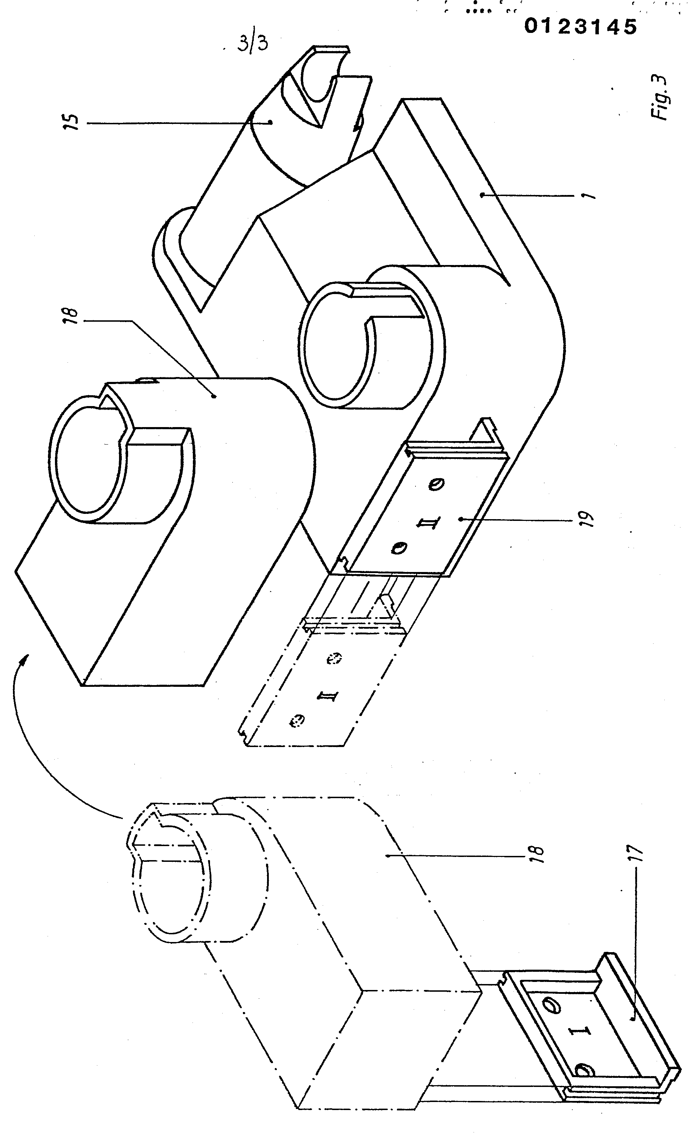

Figur 3  -  eine schematische räumliche Darstellung
des Mund- und Zahnspritzgerätes und
eines Zahnbürstenauflädegerätes mit
Halterungen zum Verbinden der Geräte
untereinander und mit einer Wand.

Das in Figur 1 dargestellte Mund- und Zahnspritzgerät hat
einen Gerätesockel 1, auf dem ein nach oben hin offener
Wasserbehälter 2 steht. Kopfüber in einer Aufnahme 3 des
Gerätesockels 1 steht eine elektrische Zahnbürste 4, die
mit ihrem nicht dargestellten Antriebszapfen eine ebenfalls nicht gezeigte Pumpe im Inneren des Gerätesockels 1
antreibt. Diese Pumpe fördert bei Betrieb des Mund- und
Zahnspritzgerätes Wasser aus einem Wasserbehälter 2 über
einen Schlauch 5 durch ein Handstück 6 und aus einer
Spritzdüse 7 heraus.

Das Handstück 6 ruht in einer Halterung 8, aus der es
zum Gebrauch entnommen werden kann. Diese Halterung 8
ist um eine Achse 9 derart schwenkbar, daß das Handstück 6 in einer gegenüber der dargestellten Position
um 90 Grad verschwenkten Position in einem Freiraum 10
des Gerätesockels 1 zu ruhen kommt. Zu diesem Zweck
verläuft die Achse 9 parallel zur vorderen Schmalseite
11 und der Freiraum 10 parallel zur Breitseite 12 des
Gerätesockels 1. In der mit 13 positionierten Bodenfläche des Freiraums 10 befinden sich Aufnahmen 14,
in die verschiedene Spritzstücke 7' zu setzen sind.
Die Figur 1 zeigt weiterhin, daß die Halterung 8 an
der freien Stirnfläche eines Wickelkörpers 15 befestigt
ist, der mit seiner anderen Stirnfläche fliegend an einem Ausleger 16 des Gerätesockesl 1 gelagert ist.

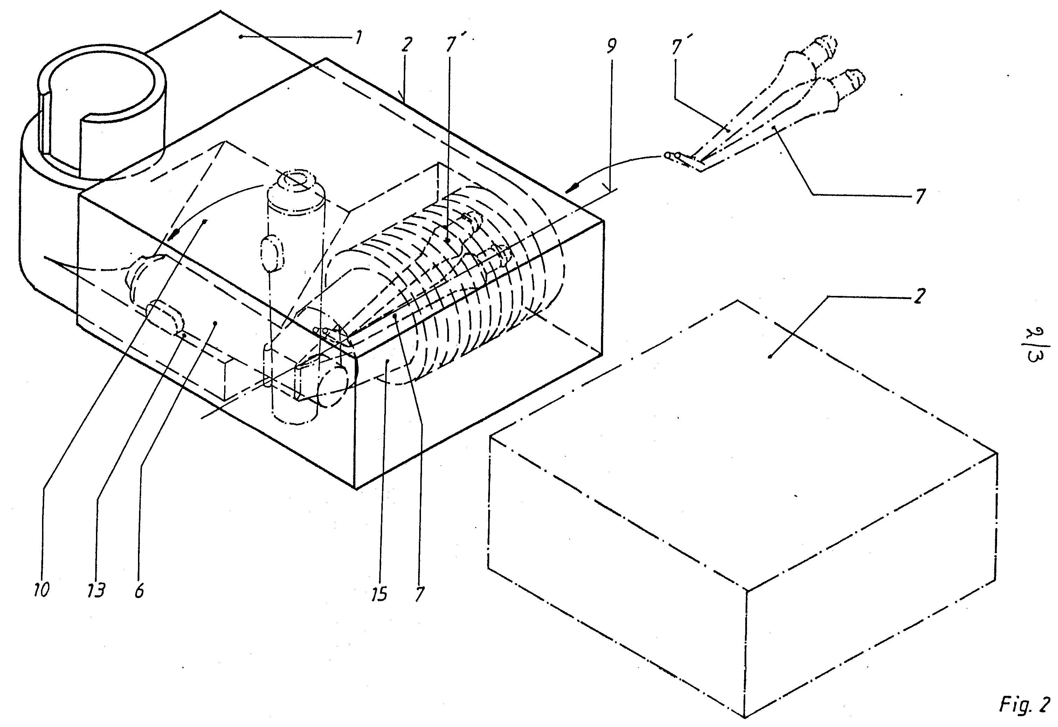

Die Figur 2 zeigt das Mund- und Zahnspritzgerät im geschlossenen Zustand. Hierzu werden zunächst die Spritzdüsen 7' aus dem Freiraum 10 entfernt. Anschließend ist das Handstück 6 um die Achse 9 zu verschwenken, bis das Handstück 6 auf der Bodenfläche 13 aufliegt. Der Wickelkörper 15 ist erfindungsgemäß als Hohlkörper ausgebildet, so daß die Spritzdüsen 7, 7' im Wickelkörper 15 Platz finden können, was gestrichelt dargestellt wurde. Wenn die Spritzdüsen 7, 7' im Wickelkörper 15 abgelegt sind und das Handstück 6 umgelegt wurde, dann kann der Wasserbehälter 2 von der Schmalseite 11 her über den Gerätesockel 1 geschoben werden. Gestrichelt ist in Figur 2 der Wasserbehälter 2 vor dem Aufschieben auf den Gerätesockel 1 dargestellt.

Figur 3 zeigt einen ortsfest z. B. mit Dübeln an einer Wand befestigten Wandhalter 17, auf den ein Zahnbürstenaufladegerät 18 mittels eines nicht dargestellten Aufnahmestückes zu schieben ist, damit das Zahnbürstenaufladegerät 18 an der Wand gehalten werden kann. Der Gerätesockel 1 des Mund- und Zahnspritzgerätes hat auf seiner Rückseite ein entsprechendes, nicht dargestelltes Aufnahmeteil, durch das statt des Zahnbürstenaufladegerätes 18 der Gerätesockel 1 am Wandhalter 17 befestigt werden kann. Weiterhin hat der Gerätesockel 1 an seiner dem Wickelkörper 15 gegenüberliegenden Schmalseite einen mit dem Wandhalter 17 übereinstimmenden Wandhalter 19. Dadurch kann das Zahnbürstenaufladegerät 18 statt an dem Wandhalter 17 wahlweise an dem Wandhalter 19 befestigt werden. Auf diese Weise können das Zahnbürstenaufladegerät 18 und der Gerätesockel 1 miteinander verbunden werden. Anschließend ist die auf diese Weise entstandene Einheit an dem Wandhalter 17 befestigbar, indem der Gerätesockel 1 mit seinem Aufnahmeteil an seiner Rückseite über den Wandhalter 17 geschoben wird.

Abschließend sei angemerkt, daß abweichend von der dargestellten Ausführungsform der Wickelkörper 15 sich auch vor der Zahnbürste 4 im Gerätesockel 1 befinden kann. Der Freiraum 13 müßte dann dort sein, wo sich bei der beschriebenen Ausführungsform  der Wickelkörper 15 befindet. Das Handstück wäre bei dieser Ausführungsform um eine parallel zur vorderen Längsseite verlaufende Achse nach hinten zu klappen.

Statt von der elektrischen Zahnbürste 4 kann die Wasserpumpe des erfindungsgemäßen Mund- und Zahnspritzgerätes natürlich auch,wie allgemein üblich,mittels eines intern angebrachten Motors angetrieben sein.

Auflistung der mit Positionszahlen gekennzeichneten
Teile

---

1   Gerätesockel

2   Wasserbehälter

3   Aufnahme

4   elektrische Zahnbürste

5   Wasserschlauch

6   Handstück

7   Spritzdüse

8   Halterung

9   Achse

10  Freiraum

11  Schmalseite

12  Breitseite

13  Bodenfläche

14  Aufnahmen

15  Wickelkörper

16  Ausleger

17  Wandhalter

18  Zahnbürstenaufladegerät

19  Wandhalter

0123145

Gimelli & Co AG, CH-3052 Zollikofen          24.03.1983

- 1 -

Ansprüche
_____

1. Mund- und Zahnspritzgerät mit einem Gerätesockel,
   in dem eine Halterung mit einem darin lösbar befestigten Handstück für eine Spritzdüse angeordnet
   ist und das einen Wasserbehälter hat, der wahlweise
   auf den Gerätesockel aufsetzbar oder über den Gerätesockel als Deckel zu stülpen ist,   d a d u r c h
   g e k e n n z e i c h n e t ,   daß die Halterung
   (8) für das Handstück (6) schwenkbar ausgebildet
   ist und daß der Gerätesockel (1) einen Freiraum
   (10) zur Aufnahme des von der Halterung (8) getragenen, in eine liegende Position geschwenkten
   Handstückes (6) hat.

2. Mund- und Zahnspritzgerät nach Anspruch 1,   d a -
   d u r c h   g e k e n n z e i c h n e t ,   daß
   die Halterung (8) an einer Schmalseite (11) des
   Gerätesockels  (1) vorgesehen und um eine parallel
   zur Schmalseite (11) verlaufende Achse (9) schwenkbar ist und daß der Freiraum (10) sich entsprechend
   an einer Längsseite des Gerätesockels (1) befindet.

- 2 -

3. Mund- und Zahnspritzgerät nach Anspruch 1 oder einem der folgenden, d a d u r c h  g e k e n n z e i c h - n e t , daß die Halterung (8) an der freien Stirnseite eines an seiner Grundfläche fliegend gehaltenen Wickelkörpers(15) für den Wasserschlauch (5) des Handstückes (6) vorgesehen ist.

4. Mund- und Zahnspritzgerät nach Anspruch 1 oder einem der folgenden, d a d u r c h  g e k e n n z e i c h - n e t , daß der Wickelkörper (15) als Hohlkörper zur Aufbewahrung von verschiedenen Spritzdüsen (7, 7') ausgebildet ist.

5. Mund- und Zahnspritzgerät nach Anspruch 1 oder einem der folgenden, d a d u r c h  g e k e n n z e i c h - n e t , daß der Gerätesockel (1) so breit wie der Wasserbehälter (2) lang und so hoch wie der Wasserbehälter (2) breit ist und daß sich bei aufgesetztem Wasserbehälter (2) der Wickelkörper (15) vor und der Freiraum (10) neben dem Wasserbehälter (2) befinden.

6. Mund- und Zahnspritzgerät nach Anspruch 1 oder einem der folgenden, d a d u r c h  g e k e n n z e i c h - n e t , daß in der Bodenfläche (13) des Freiraums (10) Aufnahmen (14) zur senkrechten Ablage nicht benutzter Spritzdüsen (7, 7') vorgesehen sind.

7. Mund- und Zahnspritzgerät nach Anspruch 1 oder einem der folgenden, d a d u r c h  g e k e n n z e i c h - n e t , daß der Gerätesockel (1) an seiner Rückseite ein Aufnahmeteil zum Aufschieben des Gerätesockels (1) auf einen Wandhalter (17) und an seiner dem Wickelkörper (15) gegenüberliegenden Schmalseite einen mit dem Wandhalter (17) identischen Wandhalter (19) zum Aufschieben eines Zahnbürstenaufladegerätes (18) hat.

8. Mund- und Zahnspritzgerät nach Anspruch 1 oder einem der folgenden, d a d u r c h  g e k e n n z e i c h - n e t ,  daß der Antrieb der Wasserpumpe mittels einer elektrischen Zahnbürste (4) erfolgt, welche kopfüber in eine Aufnahme (3) des Gerätesockels (1) zu stülpen ist.

0123145

1/3

Fig. 1

Fig. 2

0123145

Fig.3

Europäisches
Patentamt

**EUROPÄISCHER RECHERCHENBERICHT**

**0123145**
Nummer der Anmeldung

EP 84 10 3213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 094 311 (R.A. HUDSON) <br><br> * Spalte 3, Zeilen 13-41; Spalte 7, Zeile 57 - Spalte 9, Zeile 4; Figuren 1,2,12,13,27,29,30 * <br><br> --- | 1,2,5-7 | A 61 C 17/02 <br> A 61 H 13/00 |
| Y | DE-A-2 735 427 (O. HÜBNER) <br><br> * Figuren 1,5 * <br><br> --- | 1,3,6-8 | |
| Y,P | DE-A-3 143 196 (MATSUSHITA) <br> * Seite 9, Zeilen 16-19; Figuren 1,2 * <br><br> --- | 2-5 | |
| Y | CH-A- 302 739 (ISOPRESS) <br> * Seite 2, Zeilen 8-12; Figur 3 * <br><br> --- | 4 | |
| Y,P | EP-A-0 087 604 (GIMELLI & CO.) <br> * Zusammenfassung * <br><br> --- | 8 | RECHERCHIERTE SACHGEBIETE (Int. Cl. ³) <br><br> A 61 C <br> A 61 H <br> A 61 M |
| A | US-A-3 597 846 (R.M. WEISS) <br> * Insgesamt * <br><br> --- | 3-6 | |
| A | DE-A-2 545 936 (KUNO MOSER) <br><br> * Figuren 1,2 * <br><br> ---      -/- | 1-3,5,6 | |

Der vorliegende Recherchenbericht wurde für alle Patentansprüche erstellt.

| Recherchenort <br> DEN HAAG | Abschlußdatum der Recherche <br> 12-07-1984 | Prüfer <br> WOLF C.H.S. |
|---|---|---|

**Europäisches Patentamt**

## EUROPÄISCHER RECHERCHENBERICHT

EP 84 10 3213

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 420 228 (J.N. KALBFELD)<br><br>* Spalte 2, Zeilen 30-45; Figuren 1,3,4 *<br><br>--- | 1-3,5, 6 | |
| A | US-A-3 773 046 (A.J. ROSENBERG)<br>* Spalte 2, Zeilen 61-65; Figuren 2,3 *<br><br>--- | 1 | |
| A | DE-A-2 338 521 (L. KOVACH)<br>* Seite 4, Zeilen 25-31; Figuren 1,2 *<br><br>----- | 1,4 | |

RECHERCHIERTE SACHGEBIETE (Int. Cl. 3)

Der vorliegende Recherchenbericht wurde für alle Patentansprüche erstellt.

| Recherchenort<br>DEN HAAG | Abschlußdatum der Recherche<br>12-07-1984 | Prüfer<br>WOLF C.H.S. |
|---|---|---|